# EUROPEAN PATENT APPLICATION

(11) **EP 4 407 899 A1**
(43) Date of publication of application: **31.07.2024**
(21) Application number: 22889233.7
(22) Date of filing: 31.10.2022
(51) Int. Cl.: H04B 17/382, H04L 5/00

(54) **METHOD FOR IMPLEMENTING SENSING SERVICE, AND DEVICE**

(30) Priority: 05.11.2021 CN 202111308582
(71) Applicant: Vivo Mobile Communication Co., Ltd., Dongguan, Guangdong 523863 (CN)
(72) Inventor: ZHANG, Hongping, Dongguan, Guangdong 523863 (CN); BAO, Wei, Dongguan, Guangdong 523863 (CN); PAN, Xiang, Dongguan, Guangdong 523863 (CN)
(74) Representative: Petraz, Gilberto Luigi
(86) International application number: PCT/CN2022/128635
(87) International publication number: WO 2023/078208

(57) **Abstract**

Embodiments of this application disclose a method for implementing a sensing service and a device, and belong to the field of communication technologies. The method for implementing a sensing service in the embodiments of this application includes: obtaining, by a first access network device, sensing indication information related to a terminal, where the first access network device is an access network device serving the terminal; receiving, by the first access network device, a sensing measurement request message, where the sensing measurement request message is a non-terminal associated message; and determining, by the first access network device according to the sensing indication information, a terminal used for executing a sensing task.

## Description

### CROSS-REFERENCE TO RELATED APPLICATION

This application claims priority to Chinese Patent Application No. 202111308582.6 filed on November 5, 2021, which is incorporated herein by reference in its entirety.

### TECHNICAL FIELD

This application relates to the field of communication technologies, and specifically, to a method for implementing a sensing service and a device. The device may include an apparatus for implementing a sensing service, a terminal, a network side device, or the like.

### BACKGROUND

In addition to a communication capability, future mobile communication systems will usually have a sensing capability. A communication device (for example, a terminal) with the sensing capability can detect, track, recognize, or image target objects, events, environments, or the like by sending and receiving wireless signals.

For some scenarios of sensing tasks, such as weather sensing in an area, air pollution monitoring, and human/vehicle traffic monitoring, proper terminals are usually needed to be selected to perform the above sensing tasks. However, when a core network device selects a terminal to perform the sensing task, an unsuitable terminal may be selected, which is not conducive to meeting sensing service requirements.

### SUMMARY

Embodiments of this application provide a method for implementing a sensing service and a device, which can resolve a problem that a core network device cannot select a proper terminal used for executing a sensing task.

According to a first aspect, a method for implementing a sensing service is provided, including: obtaining, by a first access network device, sensing indication information related to a terminal, where the first access network device is an access network device serving the terminal; receiving, by the first access network device, a sensing measurement request message, where the sensing measurement request message is a non-terminal associated message; and determining, by the first access network device according to the sensing indication information, a terminal used for executing a sensing task.

According to a second aspect, a method for implementing a sensing service is provided, including: sending, by a core network device, sensing indication information of a terminal to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

According to a third aspect, a method for implementing a sensing service is provided, including: sending, by a terminal, sensing indication information to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

According to a fourth aspect, an apparatus for implementing a sensing service is provided, including: an obtaining module, configured to obtain sensing indication information related to a terminal, where the apparatus is an access network device serving the terminal; and the obtaining module is further configured to receive a sensing measurement request message, where the sensing measurement request message is a non-terminal associated message; and a determining module, configured to determine, according to the sensing indication information, a terminal used for executing a sensing task.

According to a fifth aspect, an apparatus for implementing a sensing service is provided, including: a sending module, configured to send sensing indication information of a terminal to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

According to a sixth aspect, an apparatus for implementing a sensing service is provided, including: a sending module, configured to send sensing indication information to a first access network device, where the first access network device is an access network device serving the apparatus; and the sensing indication information is used for the first access network device to determine, in a case of receiving a sensing measurement request message, a terminal used for executing a sensing task, where the sensing measurement request message is a non-terminal associated message.

According to a seventh aspect, a terminal is provided. The terminal includes a processor, a memory, and a program or instructions stored in the memory and executable on the processor, where when the program or the instructions are executed by the processor, the method according to the third aspect is implemented.

According to an eighth aspect, a terminal is provided, including a processor and a communication interface. The communication interface is configured to send sensing indication information to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

According to a ninth aspect, a network side device is provided. The network side device includes a processor, a memory, and a program or instructions stored in the memory and executable on the processor, where when the program or the instructions are executed by the processor, the method according to the first aspect is implemented, or the method according to the second aspect is implemented.

According to a tenth aspect, a network side device is provided, including a processor and a communication interface. The communication interface is configured to obtain sensing indication information related to a terminal, where the network side device is an access network device serving the terminal; and receive a sensing measurement request message, where the sensing measurement request message is a non-terminal associated message. The processor is configured to determine, according to the sensing indication information, a terminal used for executing a sensing task. Alternatively, the communication interface is configured to send sensing indication information of a terminal to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

According to an eleventh aspect, a readable storage medium is provided. The readable storage medium stores a program or instructions, where when the program or the instructions are executed by a processor, the method according to the first aspect is implemented, or the method according to the second aspect is implemented, or the method according to the third aspect is implemented.

According to a twelfth aspect, a chip is provided. The chip includes a processor and a communication interface. The communication interface is coupled to the processor. The processor is configured to execute a program or instructions, to implement the method according to the first aspect, or implement the method according to the second aspect, or implement the method according to the third aspect.

According to a thirteenth aspect, a computer program/program product is provided. The computer program/program product is stored in a non-transitory storage medium, the computer program/program product is executed by at least one processor to implement the method according to the first aspect, or implement the method according to the second aspect, or implement the method according to the third aspect.

In the embodiments of this application, the first access network device obtains sensing indication information related to the terminal. In a case that the first access network device receives non-terminal associated sensing measurement request message, the first access network device can determine, according to the sensing indication information, a terminal used for executing a sensing task. In some sensing scenarios, compared with the core network device selecting the terminal used for executing a sensing task, because the first access network device is more aware of related information of the terminal, such as approximate position information of the terminal and a radio resource control (Radio Resource Control, RRC) status of the terminal, the first access network device can better select a terminal that is more proper to execute a sensing task, to better meet sensing service requirements.

### BRIEF DESCRIPTION OF THE DRAWINGS

FIG. 1 is a schematic diagram of a wireless communication system according to an embodiment of this application;
FIG. 2 is a schematic flowchart of a method for implementing a sensing service according to an embodiment of this application;
FIG. 3 is a schematic flowchart of a method for implementing a sensing service according to an embodiment of this application;
FIG. 4 is a schematic flowchart of a method for implementing a sensing service according to an embodiment of this application;
FIG. 5 is a schematic flowchart of a method for implementing a sensing service according to an embodiment of this application;
FIG. 6 is a schematic flowchart of a method for implementing a sensing service according to an embodiment of this application;
FIG. 7 is a schematic flowchart of a method for implementing a sensing service according to an embodiment of this application;
FIG. 8 is a schematic flowchart of a method for implementing a sensing service according to an embodiment of this application;
FIG. 9 is a schematic structural diagram of an apparatus for implementing a sensing service according to an embodiment of this application;
FIG. 10 is a schematic structural diagram of an apparatus for implementing a sensing service according to an embodiment of this application;
FIG. 11 is a schematic structural diagram of an apparatus for implementing a sensing service according to an embodiment of this application;
FIG. 12 is a schematic structural diagram of a communication device according to an embodiment of this application;
FIG. 13 is a schematic structural diagram of a terminal according to an embodiment of this application; and
FIG. 14 is a schematic structural diagram of a network side device according to an embodiment of this application.

### DETAILED DESCRIPTION

The following clearly and completely describes technical solutions in embodiments of this application with reference to accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

In the specification and the claims of this application, terms "first", "second", and the like are used to distinguish similar objects, but are unnecessarily used to describe a specific sequence or order. It should be understood that, the terms used in such a way are exchangeable in a proper case, so that the embodiments of this application can be implemented in another order other than those shown or described herein, and the objects distinguished by "first" and "second" are usually of a same type, and a number of objects is not limited. For example, a first object may be one or more. In addition, "and/or" in the specification and the claims indicates at least one of connected objects, and a character "/" generally indicates that connected objects are in an "or" relationship.

It should be noted that the technologies described in the embodiments of this application are not limited to a long term evolution (Long Term Evolution, LTE)/an LTE-advanced (LTE-Advanced, LTE-A) system, or may further be applied to various wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier-Frequency Division Multiple Access (Single Carrier Frequency Division Multiple Access, SC-FDMA), and other systems. The terms "system" and "network" in the embodiments of this application may usually be used interchangeably. The technology described can be applied to the systems and radio technologies mentioned above, and can also be applied to other systems and radio technologies. The following description describes a New Radio (New Radio, NR) system for example purposes, and NR terminology is used in most of the following description. These technologies may also be applied to applications other than NR system applications, such as a 6th generation (6^{th} Generation, 6G) communication system.

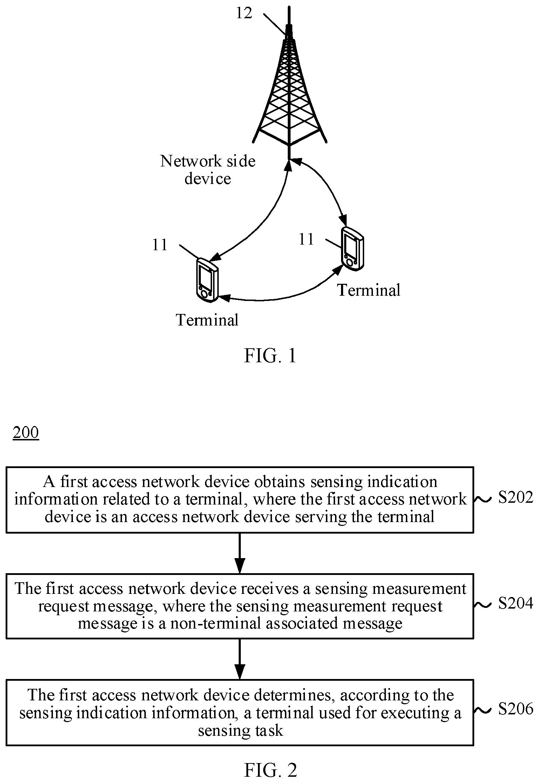

FIG. 1 is a schematic diagram of a wireless communication system to which an embodiment of this application is applicable. The wireless communication system includes a terminal 11 and a network side device 12. The terminal 11 may also be referred to as a terminal device or a user equipment (user equipment, UE). The terminal 11 may be terminal side devices such as a mobile phone, a tablet personal computer (tablet personal computer), a laptop computer (laptop computer) or a notebook computer, a personal digital assistant (personal digital assistant, PDA), a palmtop computer, a netbook, an ultra-mobile personal computer (ultra-mobile personal computer, UMPC), a mobile Internet device (mobile Internet device, MID), an augmented reality (augmented reality, AR) or a virtual reality (virtual reality, VR) device, a robot, a wearable device (wearable device), a vehicle user equipment (VUE), a pedestrian user equipment (PUE), a smart household (household devices with a wireless communication function, such as a refrigerator, a television, a washing machine, or furniture). The wearable devices include: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, a game console, and the like. It should be noted that a specific type of the terminal 11 is not limited in the embodiments of this application. The network side device 12 may be a base station or a core network. The base station may be referred to as a NodeB, an evolved NodeB, an access point, a Base Transceiver Station (Base Transceiver Station, BTS), a radio base station, a radio transceiver, a Basic Service Set (Basic Service Set, BSS), an Extended Service Set (Extended Service Set, ESS), a next generation NodeB, a home NodeB, a home evolved NodeB, a WLAN access point, a Wi-Fi node, a Transmitting Receiving Point (Transmitting Receiving Point, TRP), or another proper term in the field. As long as a same technical effect is achieved, the base station is not limited to a specific technical term. It should be noted that a base station in the NR system is only used as an example in the embodiments of this application, but a specific type of the base station is not limited.

The method for implementing a sensing service and a device provided in the embodiments of this application are described below in detail with reference to the accompanying drawings through some embodiments and application scenarios thereof.

As shown in FIG. 2, the embodiments of this application provide a method 200 for implementing a sensing service. The method may be performed by a first access network device. In other words, the method may be performed by software or hardware installed in the first access network device, and the method includes the following steps.

S202: The first access network device obtains sensing indication information related to a terminal, where the first access network device is an access network device serving the terminal.

In this embodiment, the first access network device may be a base station, for example, a gNB.

In this embodiment, the first access network device may obtain the sensing indication information related to a terminal served by the first access network device. The sensing indication information related to different terminals may be different. For example, sensing indication information related to a terminal 1 is sensing indication information 1; and sensing indication information related to a terminal 2 is sensing indication information 2, and the like.

Optionally, the sensing indication information related to the terminal is used for indicating at least one of the following: (1) whether the terminal is allowed to execute a sensing task; (2) a sensing capability of the terminal, for example, a supported sensing method, a supported sensing signal (for sending or measurement), a sensing frequency band supporting sending or measurement, and a sensing measurement capability; (3) whether a position of the terminal is fixed; and (4) whether the terminal is a sensing measurement unit.

S204: The first access network device receives a sensing measurement request message, where the sensing measurement request message is a non-terminal associated message.

The measurement request message may be sent by a sensing server to the first access network device. In this embodiment, for example, the sensing server receives a sensing request message from a third party or a core network, and the sensing request message is not associated with a terminal, that is, the core network or the third party does not select a specific terminal to execute a sensing task. For example, the sensing request message may be used for requesting to sense a weather condition in an area, and monitor air pollution, human traffic, traffic congestion, and the like. In this way, the sensing server may determine, according to the received sensing request message, for example, sensing region information, one or more first access network devices with a coverage region overlapping a sensing region, and send a sensing measurement request message to the first access network device, for requesting the first access network device to perform sensing measurement.

Optionally, the sensing measurement request message may carry a type of a sensing request (for example, sensing weather or sensing air), the sensing region information, and sensing quality of service (Quality of Service, QoS).

S206: The first access network device determines, according to the sensing indication information, a terminal used for executing a sensing task.

Since the first access network device stores context information of a terminal in a radio resource control (Radio Resource Control, RRC) connected state and an RRC inactive state, including the sensing indication information, the first access network device determines (or selects) the terminal used for executing a sensing task based on (or at least partially based on) stored sensing indication information of each terminal.

Optionally, the terminal determined by the first access network device and used for executing a sensing task meets at least one of the following: (1) being allowed to execute the sensing task; (2) a possessed sensing capability supporting the sensing task; (3) being in an RRC connected state; (4) being in an RRC inactive state, where (3) and (4) do not usually exist at the same time; (5) having a fixed position; (6) being a sensing measurement unit; and (7) matching a sensing region corresponding to the sensing task.

Optionally, in a case that the terminal used for executing a sensing task is in the RRC inactive state, the method further includes: sending, by the first access network device, a paging message only in all or a part of cells under the first access network device, where the paging message is used for paging the terminal in the RRC inactive state. In this embodiment, the paging message is not delivered in a range of a radio access network (Radio Access Network, RAN) notification area (RAN Notification Area, RNA), that is, a RAN paging message is not sent to other access network devices in the RNA, which is conducive to saving network resources.

In the method for implementing a sensing service in the embodiments of this application, the first access network device obtains the sensing indication information related to the terminal. In a case that the first access network device receives the non-terminal associated sensing measurement request message, the first access network device can determine, according to the sensing indication information, the terminal used for executing a sensing task. In some sensing scenarios, compared with the core network device selecting the terminal used for executing a sensing task, because the first access network device is more aware of related information of the terminal, such as approximate position information of the terminal and a RRC status of the terminal, the first access network device can better select a terminal that is more proper to execute a sensing task, to better meet sensing service requirements.

Optionally, in S202, that the first access network device obtains sensing indication information related to a terminal may include at least one of the following:
(1) The first access network device receives the sensing indication information from the core network device. In this embodiment, the core network device may send the sensing indication information related to the terminal to the first access network device. The sensing indication information may be determined when a user signs up, and is stored in a user database. When the terminal registers, the core network device obtains the sensing indication information of the terminal from the user database.
(2) The first access network device receives the sensing indication information from the terminal. In this embodiment, the terminal may send the sensing indication information to the first access network device that provides services.
(3) The first access network device receives the sensing indication information from a second access network device, where the first access network device is an access network device serving the terminal after switching, RRC reestablishment, or RRC restoration, and the second access network device is an access network device serving the terminal before the switching, the RRC reestablishment, or the RRC restoration. That is, the first access network device is an access network device serving the terminal after the switching, and the second access network device is an access network device serving the terminal before the switching; or the first access network device is an access network device serving the terminal after the RRC reestablishment, and the second access network device is an access network device serving the terminal before the RRC reestablishment; or the first access network device is an access network device serving the terminal after the RRC restoration, and the second access network device is an access network device serving the terminal before the RRC restoration.

Optionally, after the first access network device obtains the sensing indication information related to the terminal, the method further includes: sending, by the first access network device, the sensing indication information to a third access network device, where the first access network device is an access network device serving the terminal before the switching, the RRC reestablishment, or the RRC restoration, and the third access network device is an access network device serving the terminal after the switching, the RRC reestablishment, or the RRC restoration. That is, the first access network device is an access network device serving the terminal before the switching, and the third access network device is an access network device serving the terminal after the switching; or the first access network device is a service access network device of the terminal before the RRC reestablishment, and the third access network device is an access network device serving the terminal after the RRC reestablishment; or the first access network device is an access network device serving the terminal before the RRC restoration, and the third access network device is an access network device serving the terminal after the RRC restoration.

Optionally, based on the foregoing embodiments, after the first access network device determines, according to the sensing indication information, the terminal used for executing a sensing task, the method further includes at least one of the following (1) and (2).
(1) The first access network device sends a sensing signal, where the terminal used for executing a sensing task is configured to generate a measurement result according to the sensing signal; and the first access network device receives the measurement result.

Optionally, in a case that the first access network device sends the sensing signal, the method further includes: sending, by the first access network device, measurement configuration information, where the measurement configuration information includes at least one of the following: a resource configuration of the sensing signal, a reception trigger condition of the sensing signal, and a reporting manner of the measurement result.

(2) The first access network device receives a sensing signal, where the sensing signal is sent by the terminal used for executing a sensing task; and the first access network device generates a measurement result according to the sensing signal.

Optionally, in a case that the first access network device receives the sensing signal, the method further includes: sending, by the first access network device, sensing signal configuration information, where the sensing signal configuration information includes a resource configuration of the sensing signal.

To described the method for implementing a sensing service provided in the embodiments of this application, some specific embodiments are used for description below.

### Embodiment 1

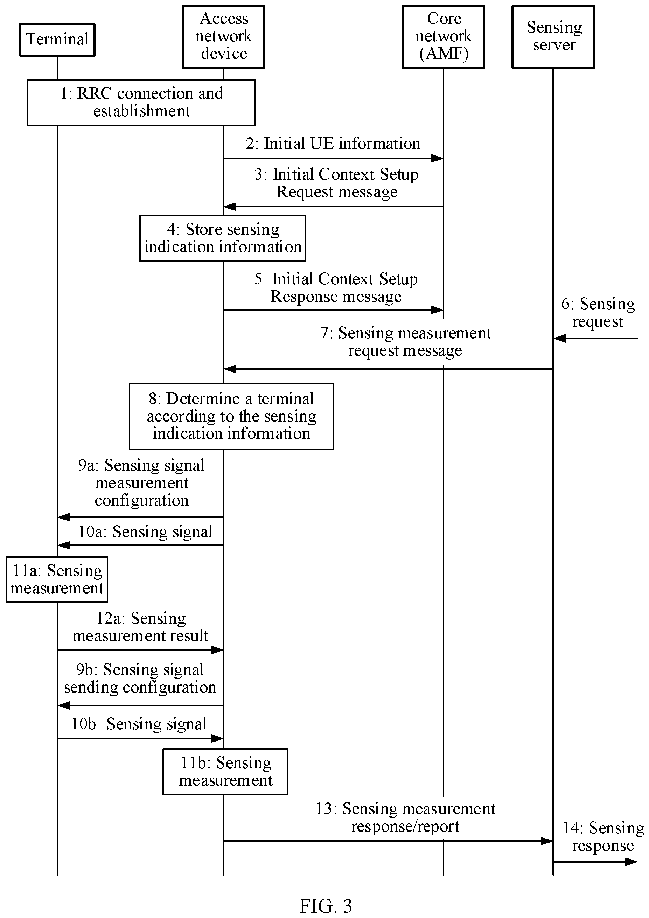

In this embodiment, the base station (corresponding to the first access network device in the foregoing embodiments) obtains the sensing indication information from the core network. A flowchart of this embodiment is shown in FIG. 3, including the following steps:
Step 1: The terminal establishes an RRC connection to the base station.
Step 2: The base station sends an Initial UE Message (Initial UE Message) to the core network.
Step 3: The core network sends an Initial Context Setup Request (Initial Context Setup Request) message to the base station. The message carries the sensing indication information, and the sensing indication information includes at least one or any combination of the following information:

(1) Indication information of whether the terminal is allowed to perform sensing, where the indication information may be, for example, one bit, and indicates that the terminal is allowed to perform sensing when a value is 1.
(2) A sensing capability of the terminal, where the sensing capability of the terminal includes, for example, a supported sensing method, a supported sensing signal (for sending or measurement), a sensing frequency band supporting sending or measurement, and a sensing measurement capability.

Optionally, the sensing capability of the terminal may be a part of a wireless access capability of the terminal, that is, sensing capability information is carried in the wireless access capability of the terminal. The core network may obtain the wireless access capability of the terminal.

(3) Other properties of the terminal, for example, whether the terminal is a terminal having a fixed position (not moving), whether the terminal is a sensing measurement unit, and other information.

Step 4: The base station stores the sensing indication information corresponding to the terminal obtained from the core network.

Step 5: The base station sends an Initial Context Setup Response (Initial Context Setup Response) message to the core network, and the base station enters a connected state.

Step 6: The sensing server receives the sensing request from, for example, the third party or the core network. The sensing request is not associated with a specific UE, that is, the core network or the third party does not select a specific UE to perform sensing measurement. The sensing request may be used for requesting, for example, to sense a weather condition in an area, and to monitor air pollution, human traffic, and traffic congestion. The sensing request may carry a type of the sensing request (for example, sensing weather or sensing air), the sensing region information, and sensing QoS.

Step 7: The sensing server determines (one or more) target base stations according to the sensing request, for example, the sensing region request, and sends a first message (for example, a sensing measurement request message) to the target base station, to request the target base station to perform sensing measurement.

The first message may carry one or any combination of a sensing method, a sensing measurement amount, a sensing region (a target sensing region or a region in which a sensing measurement terminal is located), a quantity of sensing measurement UEs, a quantity of a measurement amount reported by each UE, a report type (a report measurement amount or a sensing result), and other information.

It should be noted that the first message is a non-UE associated (non-UE associated) message or a global (global) message. The first message may be a message of a protocol stack (for example, SP2) between the base station and the sensing server. The first message may be sent to the target base station through the core network, but an NG Application Protocol (NG Application Protocol, NGAP) message (that is, the protocol stack message between the core network and the base station) carrying the message is a non-UE associated (non-UE associated) message, that is, not carrying a UE NGAP ID allocated by the base (that is, a RAN UE NGAP ID).

Step 8: The base station stores the context information of the terminal in the RRC connected state and the inactive state, including the sensing indication information. The base station (selects) determines a terminal performing sensing based on (or at least partially based on) the stored sensing indication information of each terminal. For example, the terminal may be selected from any one or a combination of a plurality of terminals that meet the following conditions:
(1) Select a terminal allowed to perform sensing, to meet requirements of privacy protection, and protect user privacy.
(2) Select a terminal with a corresponding sensing capability supporting the sensing task. For example, by excluding the terminal in the inactive state, the base station selects the terminal in the RRC connected state, avoiding a process of the terminal entering the RRC connected state, to reduce a sensing delay.
(3) Select the terminal in the RRC connected state.
(4) Select a terminal or a sensing measurement unit having a fixed position.

Certainly, in addition to the sensing indication information, the base station may also additionally take other factors into account together for selection. For example, the base station may evaluate a direction of each terminal through a receive beam corresponding to each terminal, and evaluate a (rough) distance between the terminal and the base station through a measurement result reported by the terminal. Therefore, the base station may select a terminal matching the sensing region in the first message. The "matching" may be that a position of the terminal is evaluated to be located in the sensing region. Because the base station has the additional information, compared with the core network selecting a terminal, the base station can select a terminal that is more proper to perform sensing measurement (that is, better matches the sensing region), to better meet sensing requirements.

Optionally, the base station may perform multi-level selection. For example, a part of terminals (for example, terminals that are allowed to perform sensing and that are in the connected state) are selected to be delivered for measurement, and a more proper terminal is further selected based on a measurement result.

Optionally, the base station may alternatively select a terminal in the RRC inactive state according to context of the terminal. For example, when there is not a proper terminal in the RRC connected state, or the terminal in the RRC inactive state is a sensing measurement unit more proper to perform sensing, the base station may select a terminal in the RRC inactive state. When the terminal in the RRC inactive state is selected as a sensing terminal, the base station delivers the paging message to page the terminal only in all cells or a part of cells under the base station (different from a general situation of delivering a paging message in the RNA range, that is, not sending a RAN paging message to other base stations in the RAN, to save network resources). If the terminal is in the cell under the base station, the terminal enters the RRC connected state after receiving the paging message, and other operations are consistent with the terminal in the RRC connected state.

Step 9: The sensing measurement may be that the base station transmits a sensing signal, and the terminal performs sensing measurement, or may be that the terminal transmits a sensing signal, and the base station performs sensing measurement. If the base station transmits the sensing signal, 9a to 12a are performed; or if the terminal transmits the sensing signal, 9b to 11b are performed.

Step 9a: The base station sends a sensing signal measurement configuration to the terminal, including a parameter configuration of a time domain and a frequency domain, a trigger condition, a reporting manner (for example, cyclic or not), and the like of the sensing signal.

Step 10a: The base station sends the sensing signal, where an order between 9a and 10a is not limited.

Step 11a: The terminal performs sensing measurement.

Step 12a: After the trigger condition is met, the terminal sends a sensing measurement result to the base station. The terminal may send one measurement result, or may send a plurality of measurement results, for example, cyclically send the measurement results.

Step 9b: The base station sends a sensing signal sending configuration to the terminal, including a parameter configuration of a time domain and a frequency domain of the sensing signal.

Step 10b: The terminal sends the sensing signal according to the sensing signal sending configuration.

Step 11b: The base station performs sensing measurement, obtains a sensing measurement result, and optionally generates a sensing result based on the sensing measurement result.

Step 13: The base station sends a sensing measurement response or reports sensing measurement to the sensing server, carrying the sensing measurement result or the sensing result.

Step 14: After receiving the sensing measurement result, the sensing server may calculate the sensing result based on the sensing measurement result, or receives the sensing result from the terminal. The sensing server may determine whether to trigger sending a sensing response to the third party or the core network. For example, when the sensing result is not ideal, more sensing measurement results may be continuously received; and when the sensing results meet requirements, the sensing server triggers sending the sensing response to the third party or the core network, where the sensing response carries the sensing result.

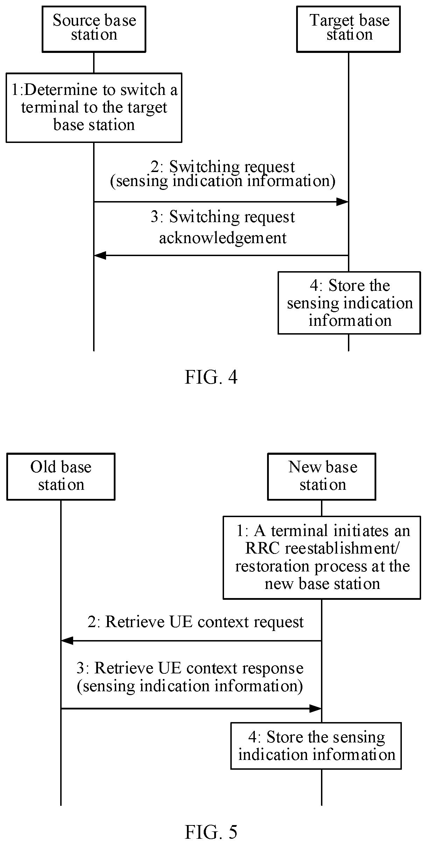

In Embodiment 1, optionally, when the terminal is switched, a source base station may send the sensing indication information to the target base station, for example, by carrying the sensing indication information in a switch request message, and the base station stores the sensing indication information of the terminal. A specific procedure is shown in FIG. 4.

In Embodiment 1, optionally, when RRC reestablishment occurs in the terminal, or the terminal enters the connected state (RRC restoration) from the inactive (inactive) state. An old base station sends the sensing indication information to a new base station (that is, a target base station reestablished or restored), for example, by carrying the sensing indication information in a Retrieve UE Context Response (RETRIEVE UE CONTEXT RESPONSE) message, and the new base station stores the sensing indication information of the terminal. A specific procedure is shown in FIG. 5.

Therefore, for the terminal in the RRC connected state, even though the terminal is switched, a current service base station of the terminal may always store the sensing indication information of the terminal.

### Embodiment 2

In this embodiment, the base station obtains the sensing indication information from the terminal.

In Embodiment 1, the base station obtains the sensing indication information from the core network. In this embodiment, a difference lies in that the base station obtains the sensing indication information from the terminal, and other part is basically the same as Embodiment 1, which is not repeated herein again.

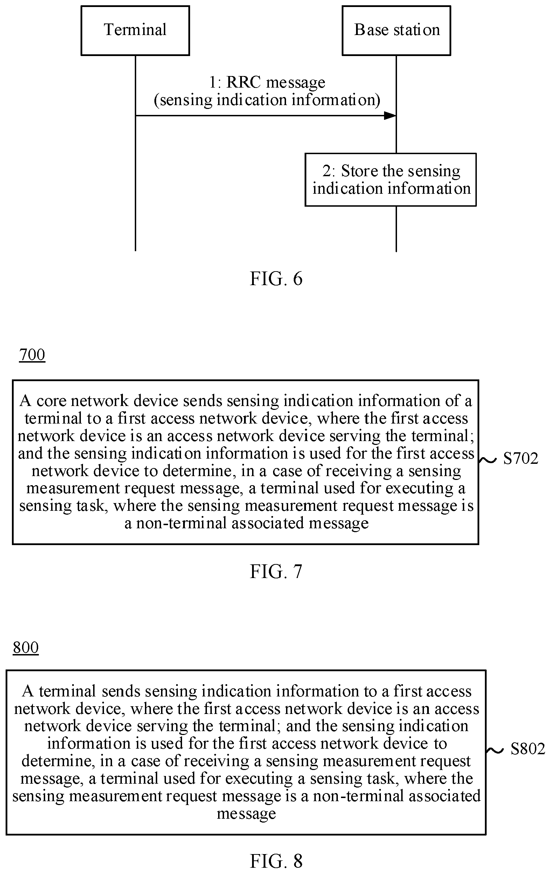

As shown in FIG. 6, this embodiment includes the following steps.

Step 1: The terminal enters the RRC connected state, and the terminal sends an RRC message to the base station, where the RRC message carries the sensing indication information.

The RRC message may be an RRC establishment completion message; or may be a UE Assistance Information (UE Assistance Information) message; or may be a message sent after the base station requests. For example, the base station sends a UE Information Request (UE Information Request) message to the terminal, to request the terminal to send the sensing indication information, and the terminal sends a UE Information Response (UE Information Response) message, where the message carries the sensing indication information.

Step 2: The base station stores the sensing indication information.

The above describes the method for implementing a sensing service according to the embodiments of this application in detail with reference to FIG. 2 to FIG. 6. The following describes the method for implementing a sensing service according to the embodiments of this application in detail with reference to FIG. 7 and FIG. 8. It may be understood that description from a side of a core network device and a terminal is the same as or corresponding to the description from a first access network device side in the method shown in FIG. 2. To avoid repetition, related description is appropriately omitted.

FIG. 7 is a schematic flowchart of implementing a method for implementing a sensing service according to an embodiment of this application, which may be applied to a core network device. As shown in FIG. 7, the method 700 includes the following steps.

S702: A core network device sends sensing indication information of a terminal to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

In the method for implementing a sensing service in this embodiment of this application, the core network device sends the sensing indication information of the terminal to the first access network device. In a case that the first access network device receives the non-terminal associated sensing measurement request message, the first access network device can determine, according to the sensing indication information, the terminal used for executing a sensing task. In some sensing scenarios, compared with the core network device selecting the terminal used for executing a sensing task, because the first access network device is more aware of related information of the terminal, such as approximate position information of the terminal and a RRC status of the terminal, the first access network device can better select a terminal that is more proper to execute a sensing task, to better meet sensing service requirements.

Optionally, in an embodiment, the sensing indication information is used for indicating at least one of the following: whether the terminal is allowed to execute a sensing task; a sensing capability of the terminal; whether a position of the terminal is fixed; and whether the terminal is a sensing measurement unit.

FIG. 8 is a schematic flowchart of implementing a method for implementing a sensing service according to an embodiment of this application, which may be applied to a terminal. As shown in FIG. 8, the method 800 includes the following steps.

S802: A terminal sends sensing indication information to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

In the method for implementing a sensing service in this embodiment of this application, the terminal sends the sensing indication information to the first access network device. In a case that the first access network device receives the non-terminal associated sensing measurement request message, the first access network device can determine, according to the sensing indication information, the terminal used for executing a sensing task. In some sensing scenarios, compared with the core network device selecting the terminal used for executing a sensing task, because the first access network device is more aware of related information of the terminal, such as approximate position information of the terminal and a RRC status of the terminal, the first access network device can better select a terminal that is more proper to execute a sensing task, to better meet sensing service requirements.

Optionally, in an embodiment, the sensing indication information is used for indicating at least one of the following: whether the terminal is allowed to execute a sensing task; a sensing capability of the terminal; whether a position of the terminal is fixed; and whether the terminal is a sensing measurement unit.

It should be noted that the method for implementing a sensing service provided in the embodiments of this application may be performed by an apparatus for implementing a sensing service, or a control module configured to perform the method for implementing a sensing service in the apparatus for implementing a sensing service. An example in which the apparatus for implementing a sensing service performs the method for implementing a sensing service is used in this embodiment of this application to describe the apparatus for implementing a sensing service provided in the embodiments of this application.

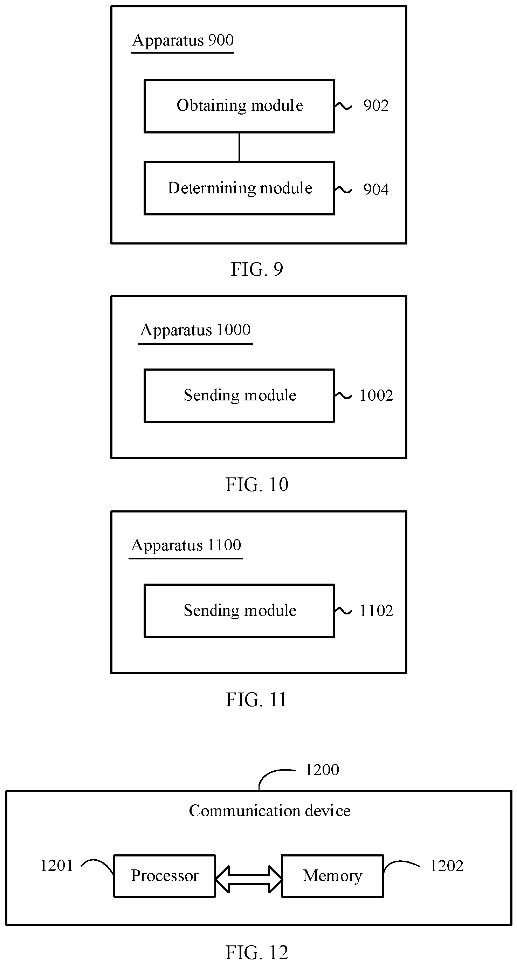

FIG. 9 is a schematic structural diagram of an apparatus for implementing a sensing service according to an embodiment of this application. The apparatus may correspond to the first access network device in other embodiments. As shown in FIG. 9, the apparatus 900 includes the following modules.

An obtaining module 902 may be configured to obtain sensing indication information related to a terminal, where the apparatus is an access network device serving the terminal.

The obtaining module 902 may further be configured to receive a sensing measurement request message, where the sensing measurement request message is a non-terminal associated message.

A determining module 904 may be configured to determine, according to the sensing indication information, a terminal used for executing a sensing task.

In the apparatus for implementing a sensing service provided in this embodiment of this application, the obtaining module obtains the sensing indication information related to the terminal, and in a case that the obtaining module receives the non-terminal associated sensing measurement request message, the determining module can determine the terminal configured to perform a sensing task according to the sensing indication information. In some sensing scenarios, compared with the core network device selecting the terminal used for executing a sensing task, because the apparatus is more aware of related information of the terminal, such as approximate position information of the terminal and a RRC status of the terminal, the apparatus can better select a terminal that is more proper to execute a sensing task, to better meet sensing service requirements.

Optionally, in an embodiment, the obtaining module 902 is configured to perform at least one of the following: receiving the sensing indication information from a core network device; receiving the sensing indication information from the terminal; and receiving the sensing indication information from a second access network device, where the apparatus is an access network device serving the terminal after switching, RRC reestablishment, or RRC restoration, and the second access network device is an access network device serving the terminal before the switching, the RRC reestablishment, or the RRC restoration.

Optionally, in an embodiment, the apparatus further includes a sending module, configured to send the sensing indication information to a third access network device. The apparatus is an access network device serving the terminal before the switching, the RRC reestablishment, or the RRC restoration, and the third access network device is an access network device serving the terminal after the switching, the RRC reestablishment, or the RRC restoration.

Optionally, in an embodiment, the sensing indication information is used for indicating at least one of the following: whether the terminal is allowed to execute a sensing task; a sensing capability of the terminal; whether a position of the terminal is fixed; and whether the terminal is a sensing measurement unit.

Optionally, in an embodiment, the terminal determined by the determining module 904 and used for executing a sensing task meets at least one of the following: being allowed to execute the sensing task; a possessed sensing capability supporting the sensing task; being in an RRC connected state; being in an RRC inactive state; having a fixed position; being a sensing measurement unit; and matching a sensing region corresponding to the sensing task.

Optionally, in an embodiment, the apparatus further includes a sending module, configured to send a paging message only in all or a part of cells under the apparatus in a case that the terminal used for executing a sensing task is in the RRC inactive state, where the paging message is used for paging the terminal in the RRC inactive state.

Optionally, in an embodiment, the apparatus further includes a sending module, configured to send a sensing signal, where the terminal used for executing a sensing task is configured to generate a measurement result according to the sensing signal; and the obtaining module 902 is further configured to receive the measurement result; or the obtaining module 902 is further configured to receive the sensing signal, where the sensing signal is sent by the terminal used for executing a sensing task; and the determining module 904 is further configured to generate a measurement result according to the sensing signal.

Optionally, in an embodiment, in a case that the sending module sends the sensing signal, the sending module is further configured to send a measurement configuration information, where the measurement configuration information includes at least one of the following: a resource configuration of the sensing signal, a reception trigger condition of the sensing signal, and a reporting manner of the measurement result; or in a case that the obtaining module 902 receives the sensing signal, the apparatus further includes a sending module, configured to send sensing signal configuration information, where the sensing signal configuration information includes a resource configuration of the sensing signal.

The apparatus 900 according to this embodiment of this application may refer to a procedure corresponding to the method 200 in the embodiments of this application. In addition, all units/modules in the apparatus 900 and other operations and/or functions above are respectively intended to implement corresponding procedures in the method 200, and can achieve the same or equivalent technical effect. For brevity, details are not described herein again.

The apparatus for implementing a sensing service in this embodiment of this application may be an apparatus, an apparatus with an operating system, or an electronic device, or may be a component, an integrated circuit, or a chip in a terminal. The apparatus or the electronic device may be a mobile terminal, or may be a non-mobile terminal. For example, the mobile terminal may include, but is not limited to, the types of the terminal 11 listed above. The non-mobile terminal may be a server, a network attached storage (Network Attached Storage, NAS), a personal computer (personal computer, PC), a television (television, TV), a teller machine, an automated machine, or the like, which are not specifically limited in this embodiment of this application.

The apparatus for implementing a sensing service provided in this embodiment of this application can implement processes implemented in the method embodiments of FIG. 2 to FIG. 8, and achieve the same technical effect. To avoid repetition, details are not described herein again.

FIG. 10 is a schematic structural diagram of an apparatus for implementing a sensing service according to an embodiment of this application. The apparatus may correspond to a core network device in other embodiments. As shown in FIG. 10, the apparatus 1000 includes the following modules.

A sending module 1000 may be configured to send sensing indication information of a terminal to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

Optionally, the apparatus 1000 further includes a processing module, and the like.

In the apparatus for implementing a sensing service provided in this embodiment of this application, the sending module sends the sensing indication information of the terminal to the first access network device, and in a case that the first access network device receives the non-terminal associated sensing measurement request message, the first access network device can determine, according to the sensing indication information, the terminal used for executing a sensing task. In some sensing scenarios, compared with the core network device selecting the terminal used for executing a sensing task, because the first access network device is more aware of related information of the terminal, such as approximate position information of the terminal and a RRC status of the terminal, the first access network device can better select a terminal that is more proper to execute a sensing task, to better meet sensing service requirements.

Optionally, in an embodiment, the sensing indication information is used for indicating at least one of the following: whether the terminal is allowed to execute a sensing task; a sensing capability of the terminal; whether a position of the terminal is fixed; and whether the terminal is a sensing measurement unit.

The apparatus 1000 according to this embodiment of this application may refer to a procedure corresponding to the method 700 in the embodiments of this application. In addition, all units/modules in the apparatus 1000 and other operations and/or functions above are respectively intended to implement corresponding procedures in the method 700, and can achieve the same or equivalent technical effect. For brevity, details are not described herein again.

FIG. 11 is a schematic structural diagram of an apparatus for implementing a sensing service according to an embodiment of this application. The apparatus may correspond to a terminal in other embodiments. As shown in FIG. 11, the apparatus 1100 includes the following modules.

A sending module 1100 may be configured to send sensing indication information to a first access network device, where the first access network device is an access network device serving the apparatus; and the sensing indication information is used for the first access network device to determine, in a case of receiving a sensing measurement request message, a terminal used for executing a sensing task, where the sensing measurement request message is a non-terminal associated message.

Optionally, the apparatus 1100 further includes a processing module, and the like.

In the apparatus for implementing a sensing service provided in this embodiment of this application, the sending module sends the sensing indication information to the first access network device, and in a case that the first access network device receives the non-terminal associated sensing measurement request message, the first access network device can determine, according to the sensing indication information, the terminal used for executing a sensing task. In some sensing scenarios, compared with the core network device selecting the terminal used for executing a sensing task, because the first access network device is more aware of related information of the terminal, such as approximate position information of the terminal and a RRC status of the terminal, the first access network device can better select a terminal that is more proper to execute a sensing task, to better meet sensing service requirements.

Optionally, in an embodiment, the sensing indication information is used for indicating at least one of the following: whether the terminal is allowed to execute a sensing task; a sensing capability of the terminal; whether a position of the terminal is fixed; and whether the terminal is a sensing measurement unit.

The apparatus 1100 according to this embodiment of this application may refer to a procedure corresponding to the method 800 in the embodiments of this application. In addition, all units/modules in the apparatus 1100 and other operations and/or functions above are respectively intended to implement corresponding procedures in the method 800, and can achieve the same or equivalent technical effect. For brevity, details are not described herein again.

Optionally, as shown in FIG. 12, the embodiments of this application further provide a communication device 1200, including a processor 1201, a memory 1202, and a program or instructions stored in the memory 1202 and executable on the processor 1201. For example, when the communication device 1200 is a terminal, when the program or the instructions are executed by the processor 1201, processes of the embodiments of the method for implementing a sensing service are implemented, and the same technical effect can be achieved. When the communication device 1200 is a network side device, when the program or the instructions are executed by the processor 1201, processes of the embodiments of the method for implementing a sensing service are implemented, and the same technical effect can be achieved. To avoid repetition, details are not described herein again.

The embodiments of this application further provide a terminal, including a processor and a communication interface. The communication interface is configured to send sensing indication information to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

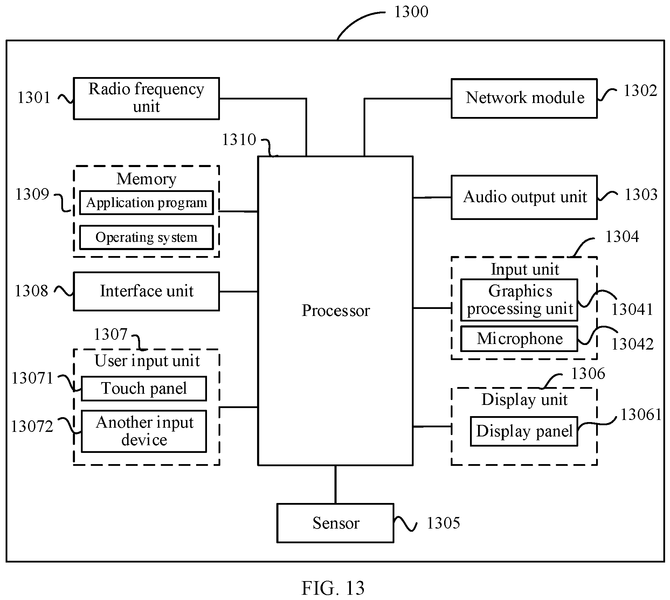

The terminal embodiment corresponds to the method embodiment of a terminal side, and all implementation processes and implementations of the method embodiment are applicable to the terminal embodiment, and can achieve the same technical effect. Specifically, FIG. 13 is a schematic diagram of a hardware structure of a terminal according to an embodiment of this application.

The terminal 1300 includes, but is not limited to, at least a part of components such as a radio frequency unit 1301, a network module 1302, an audio output unit 1303, an input unit 1304, a sensor 1305, a display unit 1306, a user input unit 1307, an interface unit 1308, a memory 1309, a processor 1310, and the like.

A person skilled in the art may understand that the terminal 1300 may further include a power supply (such as a battery) for supplying power to the components. The power supply may be logically connected to the processor 1310 by using a power management system, thereby implementing functions, such as charging, discharging, and power consumption management, by using the power management system. The terminal structure shown in FIG. 13 does not constitute a limitation on the terminal, the terminal may include more or fewer components than shown, or combine some components, or have different component arrangements, and details are not described herein again.

It should be noted that in this embodiment of this application, the input unit 1304 may include a graphics processing unit (Graphics Processing Unit, GPU) 13041 and a microphone 13042. The graphics processing unit 13041 performs processing on image data of a static picture or a video that is obtained by an image acquisition device (for example, a camera) in a video acquisition mode or an image acquisition mode. The display unit 1306 may include a display panel 13061, and the display panel 13061 may be configured by using a liquid crystal display, an organic light-emitting diode, or the like. The user input unit 1307 includes a touch panel 13071 and another input device 13072. The touch panel 13071 is also referred to as a touch screen. The touch panel 13071 may include two parts: a touch detection apparatus and a touch controller. The another input device 13072 may include, but is not limited to, a physical keyboard, a functional key (such as a volume control key or a switch key), a track ball, a mouse, and a joystick, which are not described herein again.

In this embodiment of this application, after downlink data from a network side device is received by the radio frequency unit 1301, the downlink data is delivered to the processor 1310 for processing; and uplink data is sent to the network side device. Generally, the radio frequency unit 1301 includes, but is not limited to, an antenna, at least one amplifier, a transceiver, a coupler, a low noise amplifier, a duplexer, and the like.

The memory 1309 is configured to store a software program or instructions and various data. The memory 1309 may mainly include a program or instruction storage area and a data storage area. The program or instruction storage area may store an operating system, an application program or instructions required by at least one function (for example, a sound playback function and an image display function), and the like. In addition, the memory 1309 may include a high speed random access memory, or may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device, or another non-volatile solid-state storage device.

The processor 1310 may include one or more processing units. Optionally, the processor 1310 may integrate an application processor and a modem, where the application processor mainly processes an operating system, a user interface, an application program or instructions, and the like, and the modem mainly processes wireless communication, for example, a baseband processor. It may be understood that, the modem may alternatively not be integrated in the processor 1310.

The radio frequency unit 1301 may be configured to send sensing indication information to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

The terminal provided in this embodiment of this application may send the sensing indication information to the first access network device, and in a case that the first access network device receives the non-terminal associated sensing measurement request message, the first access network device can determine, according to the sensing indication information, the terminal used for executing a sensing task. In some sensing scenarios, compared with the core network device selecting the terminal used for executing a sensing task, because the first access network device is more aware of related information of the terminal, such as approximate position information of the terminal and a RRC status of the terminal, the first access network device can better select a terminal that is more proper to execute a sensing task, to better meet sensing service requirements.

The terminal 1300 provided in this embodiment of this application may further implement processes of the embodiments of the method for implementing a sensing service, and can achieve the same technical effect. To avoid repetition, details are not described herein again.

The embodiments of this application further provide a network side device. The network side device may be a first access network device, or may be a core network device. The network side device includes a processor and a communication interface. The communication interface is configured to obtain sensing indication information related to a terminal, where the network side device is an access network device serving the terminal; and receive a sensing measurement request message, where the sensing measurement request message is a non-terminal associated message. The processor is configured to determine, according to the sensing indication information, a terminal used for executing a sensing task. Alternatively, the communication interface is configured to send sensing indication information of a terminal to a first access network device, where the first access network device is an access network device serving the terminal; and the sensing indication information is used for the first access network device to determine, in a case of receiving a sensing measurement request message, a terminal used for executing a sensing task, where the sensing measurement request message is a non-terminal associated message.

The network side device embodiment corresponds to the method embodiments of the first access network device or the core network device, and all implementation processes and implementations of the method embodiments are applicable to the network side device embodiment, and can achieve the same technical effect.

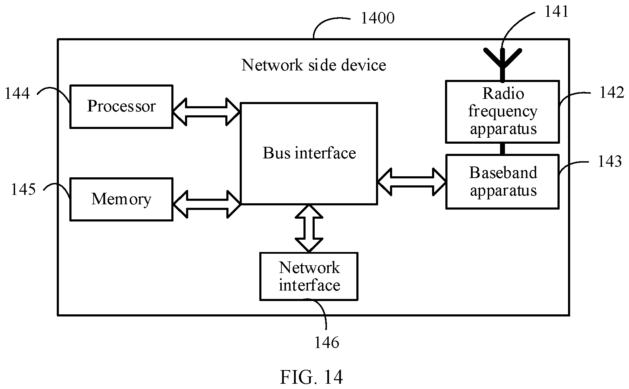

Specifically, the embodiments of this application further provide a network side device. As shown in FIG. 14, the network side device 1400 includes: an antenna 141, a radio frequency apparatus 142, and a baseband apparatus 143. The antenna 141 is connected to the radio frequency apparatus 142. In an uplink direction, the radio frequency 142 receives information through the antenna 141, and sends the received information to the baseband apparatus 143 for processing. In a downlink direction, the baseband apparatus 143 processes to-be-sent information, and sends the information to the radio frequency apparatus 142, and the radio frequency apparatus 142 processes the received information, and sends the information through the antenna 141.

The apparatus for implementing a sensing service may be located in the baseband apparatus 143, and the method performed by the network side device in the above embodiments may be implemented in the baseband apparatus 143. The baseband apparatus 143 includes a processor 144 and a memory 145.

The baseband apparatus 143, for example, may include at least one baseband board. A plurality of chips are arranged on the baseband board, as shown in FIG. 14. One of the chips is, for example, the processor 144, connected to the memory 145, to invoke a program in the memory 145, to perform the operations of the network side device shown in the above method embodiments.

The baseband apparatus 143 may further include a network interface 146, configured to exchange information with the radio frequency apparatus 142. The interface is, for example, a common public radio interface (Common Public Radio Interface, CPRI).

Specifically, the network side device in this embodiment of this application further includes: instructions or a program stored in the memory 145 and executable on the processor 144. The processor 144 invokes the instructions or the program in the memory 145 to perform the method performed by modules shown in FIG. 9 or FIG. 10, and achieves the same technical effect. To avoid repetition, details are not described herein again.

The embodiments of this application further provide a readable storage medium. The readable storage medium may be volatile, or may be non-volatile. The readable storage medium may be transitory, or may be non-transitory. The readable storage medium stores a program or instructions. When the program or the instructions are executed by a processor, processes of the embodiments of the method for implementing a sensing service are implemented, and the same technical effect can be achieved. To avoid repetition, details are not described herein again.

The processor may be the processor in the terminal in the above embodiments. The readable storage medium includes a computer-readable storage medium, such as a computer read-only memory (Read-Only Memory, ROM), a random access memory (Random Access Memory, RAM), a magnetic disk, an optical disc, or the like.

The embodiments of this application further provide a chip. The chip includes a processor and a communication interface. The communication interface is coupled to the processor. The processor is configured to execute a program or instructions, to implement processes of the embodiments of the method for implementing a sensing service, and can achieve the same technical effect. To avoid repetition, details are not described herein again.

It should be understood that the chip provided in this embodiment of this application may also be referred to as a system-level chip, a system chip, a chip system, a system on chip, or the like.

The embodiments of this application further provide a computer program product. The computer program product is stored in a non-transitory storage medium. The computer program product is executed by at least one processor to implement processes of the embodiments of the method for implementing a sensing service, and can achieve the same technical effect. To avoid repetition, details are not described herein again.

The embodiments of this application further provide a communication device, which is configured to perform processes of the embodiments of the method for implementing a sensing service, and can achieve the same technical effect. To avoid repetition, details are not described herein again.

It should be noted that terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the method and apparatus in the embodiments of this application is not limited to performing the functions in the order shown or discussed, but may also include performing the functions in a substantially simultaneous manner or in reverse order according to the functions involved, for example, the described method may be performed in a different order than described, and various steps may be added, omitted, or combined. In addition, features described with reference to some examples may be combined in other examples.

Through the descriptions of the foregoing implementations, a person skilled in the art may clearly understand that the method in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A method for implementing a sensing service, comprising:
obtaining, by a first access network device, sensing indication information related to a terminal, wherein the first access network device is an access network device serving the terminal;
receiving, by the first access network device, a sensing measurement request message, wherein the sensing measurement request message is a non-terminal associated message; and
determining, by the first access network device according to the sensing indication information, a terminal used for executing a sensing task.

2. The method according to claim 1, wherein the obtaining, by a first access network device, sensing indication information related to a terminal comprises at least one of the following:
receiving, by the first access network device, the sensing indication information from a core network device;
receiving, by the first access network device, the sensing indication information from the terminal; and
receiving, by the first access network device, the sensing indication information from a second access network device, wherein the first access network device is an access network device serving the terminal after switching, radio resource control RRC reestablishment, or RRC restoration, and the second access network device is an access network device serving the terminal before the switching, the RRC reestablishment, or the RRC restoration.

3. The method according to claim 1 or 2, wherein after the obtaining, by a first access network device, sensing indication information related to a terminal, the method further comprises:
sending, by the first access network device, the sensing indication information to a third access network device, wherein
the first access network device is an access network device serving the terminal before switching, RRC reestablishment, or RRC restoration, and the third access network device is an access network device serving the terminal after the switching, the RRC reestablishment, or the RRC restoration.

4. The method according to any one of claims 1 to 3, wherein the sensing indication information is used for indicating at least one of the following:
whether the terminal is allowed to execute a sensing task;
a sensing capability of the terminal;
whether a position of the terminal is fixed; and
whether the terminal is a sensing measurement unit.

5. The method according to any one of claims 1 to 4, wherein the terminal determined by the first access network device and used for executing the sensing task meets at least one of the following:
being allowed to execute the sensing task;
a possessed sensing capability supporting the sensing task;
being in an RRC connected state;
being in an RRC inactive state;
having a fixed position;
being a sensing measurement unit; and
matching a sensing region corresponding to the sensing task.

6. The method according to claim 5, wherein in a case that the terminal used for executing the sensing task is in the RRC inactive state, the method further comprises:
sending, by the first access network device, a paging message only in all or a part of cells under the first access network device, wherein the paging message is used for paging the terminal in the RRC inactive state.

7. The method according to any one of claims 1 to 6, wherein after the determining, by the first access network device according to the sensing indication information, a terminal used for executing a sensing task, the method further comprises:
sending, by the first access network device, a sensing signal, wherein the terminal used for executing the sensing task is configured to generate a measurement result according to the sensing signal; and receiving, by the first access network device, the measurement result; or
receiving, by the first access network device, a sensing signal, wherein the sensing signal is sent by the terminal used for executing the sensing task; and generating, by the first access network device, a measurement result according to the sensing signal.

8. The method according to claim 7, wherein
in a case that the first access network device sends the sensing signal, the method further comprises: sending, by the first access network device, measurement configuration information, wherein the measurement configuration information comprises at least one of the following: a resource configuration of the sensing signal, a reception trigger condition of the sensing signal, and a reporting manner of the measurement result; or
in a case that the first access network device receives the sensing signal, the method further comprises: sending, by the first access network device, sensing signal configuration information, wherein the sensing signal configuration information comprises a resource configuration of the sensing signal.

9. A method for implementing a sensing service, comprising:
sending, by a core network device, sensing indication information of a terminal to a first access network device, wherein the first access network device is an access network device serving the terminal; and
the sensing indication information is used for the first access network device to determine, in a case of receiving a sensing measurement request message, a terminal used for executing a sensing task, wherein the sensing measurement request message is a non-terminal associated message.

10. The method according to claim 9, wherein the sensing indication information is used for indicating at least one of the following:
whether the terminal is allowed to execute a sensing task;
a sensing capability of the terminal;
whether a position of the terminal is fixed; and
whether the terminal is a sensing measurement unit.

11. A method for implementing a sensing service, comprising:
sending, by a terminal, sensing indication information to a first access network device, wherein the first access network device is an access network device serving the terminal; and
the sensing indication information is used for the first access network device to determine, in a case of receiving a sensing measurement request message, a terminal used for executing a sensing task, wherein the sensing measurement request message is a non-terminal associated message.

12. The method according to claim 11, wherein the sensing indication information is used for indicating at least one of the following:
whether the terminal is allowed to execute a sensing task;
a sensing capability of the terminal;
whether a position of the terminal is fixed; and
whether the terminal is a sensing measurement unit.

13. An apparatus for implementing a sensing service, comprising:
an obtaining module, configured to obtain sensing indication information related to a terminal, wherein the apparatus is an access network device serving the terminal; and
the obtaining module is further configured to receive a sensing measurement request message, wherein the sensing measurement request message is a non-terminal associated message; and
a determining module, configured to determine, according to the sensing indication information, a terminal used for executing a sensing task.

14. The apparatus according to claim 13, wherein the obtaining module is configured to perform at least one of the following:
receiving the sensing indication information from a core network device;
receiving the sensing indication information from the terminal; and
receiving the sensing indication information from a second access network device, wherein the apparatus is an access network device serving the terminal after switching, RRC reestablishment, or RRC restoration, and the second access network device is an access network device serving the terminal before the switching, the RRC reestablishment, or the RRC restoration.

15. The apparatus according to claim 13 or 14, wherein the apparatus further comprises a sending module, configured to send the sensing indication information to a third access network device, wherein
the apparatus is an access network device serving the terminal before switching, RRC reestablishment, or RRC restoration, and the third access network device is an access network device serving the terminal after the switching, the RRC reestablishment, or the RRC restoration.

16. The apparatus according to any one of claims 13 to 15, wherein the sensing indication information is used for indicating at least one of the following:
whether the terminal is allowed to execute a sensing task;
a sensing capability of the terminal;
whether a position of the terminal is fixed; and
whether the terminal is a sensing measurement unit.

17. The apparatus according to any one of claims 13 to 16, wherein the terminal determined by the determining module and used for executing the sensing task meets at least one of the following:
being allowed to execute the sensing task;
a possessed sensing capability supporting the sensing task;
being in an RRC connected state;
being in an RRC inactive state;
having a fixed position;
being a sensing measurement unit; and
matching a sensing region corresponding to the sensing task.

18. The apparatus according to claim 17, wherein the apparatus further comprises a sending module, configured to send a paging message only in all or a part of cells under the apparatus in a case that the terminal used for executing the sensing task is in the RRC inactive state, wherein the paging message is used for paging the terminal in the RRC inactive state.

19. The apparatus according to any one of claims 13 to 18, wherein
the apparatus further comprises a sending module, configured to send a sensing signal, wherein the terminal used for executing the sensing task is configured to generate a measurement result according to the sensing signal; and the obtaining module is further configured to receive the measurement result; or
the obtaining module is further configured to receive a sensing signal, wherein the sensing signal is sent by the terminal used for executing the sensing task; and the determining module is further configured to sense a measurement result according to the sensing signal.

20. The apparatus according to claim 19, wherein
in a case that the sending module sends the sensing signal, the sending module is further configured to send a measurement configuration information, wherein the measurement configuration information comprises at least one of the following: a resource configuration of the sensing signal, a reception trigger condition of the sensing signal, and a reporting manner of the measurement result; or
in a case that the obtaining module receives the sensing signal, the apparatus further comprises a sending module, configured to send sensing signal configuration information, wherein the sensing signal configuration information comprises a resource configuration of the sensing signal.

21. An apparatus for implementing a sensing service, comprising:
a sending module, configured to send sensing indication information of a terminal to a first access network device, wherein the first access network device is an access network device serving the terminal; and
the sensing indication information is used for the first access network device to determine, in a case of receiving a sensing measurement request message, a terminal used for executing a sensing task, wherein the sensing measurement request message is a non-terminal associated message.

22. The apparatus according to claim 21, wherein the sensing indication information is used for indicating at least one of the following:
whether the terminal is allowed to execute a sensing task;
a sensing capability of the terminal;
whether a position of the terminal is fixed; and
whether the terminal is a sensing measurement unit.

23. An apparatus for implementing a sensing service, comprising:
a sending module, configured to send sensing indication information to a first access network device, wherein the first access network device is an access network device serving the apparatus; and
the sensing indication information is used for the first access network device to determine, in a case of receiving a sensing measurement request message, a terminal used for executing a sensing task, wherein the sensing measurement request message is a non-terminal associated message.

24. The apparatus according to claim 23, wherein the sensing indication information is used for indicating at least one of the following:
whether the terminal is allowed to execute a sensing task;
a sensing capability of the terminal;
whether a position of the terminal is fixed; and
whether the terminal is a sensing measurement unit.

25. A terminal, comprising a processor, a memory, and a program or instructions stored in the memory and executable on the processor, wherein when the program or the instructions are executed by the processor, the method for implementing a sensing service according to claim 11 or 12 is implemented.

26. A network side device, comprising a processor, a memory, and a program or instructions stored in the memory and executable on the processor, wherein when the program or the instructions are executed by the processor, the method for implementing a sensing service according to any one of claims 1 to 8 is implemented, or the method for implementing a sensing service according to claim 9 or 10 is implemented.

27. A readable storage medium, the readable storage medium storing a program or instructions, wherein when the program or the instructions are executed by a processor, the method for implementing a sensing service according to any one of claims 1 to 12 is implemented.
